# EUROPEAN PATENT APPLICATION

(11) **EP 4 769 051 A1**
(43) Date of publication of application: **01.07.2026**
(21) Application number: 24855838.9
(22) Date of filing: 21.08.2024
(51) Int. Cl.: G05D 1/43

(54) **CONTROL METHOD FOR AUTONOMOUS WORKING MACHINE, AND AUTONOMOUS WORKING MACHINE AND STORAGE MEDIUM**

(30) Priority: 21.08.2023 CN 202311055480; 29.03.2024 CN 202410381814
(71) Applicant: Positec Power Tools (Suzhou) Co., Ltd., Suzhou, Jiangsu 215123 (CN)
(72) Inventor: LU, Shuailong, Suzhou, Jiangsu 215123 (CN); ZHAO, Xin, Suzhou, Jiangsu 215123 (CN); YANG, Xiaoqi, Suzhou, Jiangsu 215123 (CN); QIN, Wei, Suzhou, Jiangsu 215123 (CN)
(74) Representative: Kilburn & Strode LLP
(86) International application number: PCT/CN2024/113652
(87) International publication number: WO 2025/040116

(57) **Abstract**

The present application relates to a control method for an autonomous working machine, an autonomous working machine and a storage medium. The autonomous working machine is configured to work in a working area, the working area includes at least two sub-working areas, the at least two sub-working areas are respectively set with different working frequencies, and the control method for the autonomous working machine includes: respectively obtaining working frequencies of the autonomous working machine in the at least two sub-working areas; and controlling the autonomous working machine to work in the at least two sub-working areas to satisfy requirements of the working frequencies of the at least two sub-working areas. The autonomous working machine may work in a sub-working area according to a working frequency, so that a user may diversely customize own working preferences.

## Description

### TECHNICAL FIELD

The present application relates to the field of robot control technology, and specifically relates to a control method for an autonomous working machine, an autonomous working machine and a storage medium.

### BACKGROUND

An autonomous working machine refers to an equipment having an autonomous movement capability, which can autonomously move and execute a work task without a human operation. For example, an autonomous working machine may include but is not limited to a drone, a floor cleaning robot, and a lawn mowing robot.

In a prior art, some autonomous working machines may allow a user to configure a workable time period of the autonomous working machine in an APP, and some autonomous working machines may allow a user to configure a workable time period of the autonomous working machine on an operation interface of the machine, to achieve a personalized configuration of the user. However, a setting method and a working efficiency in the prior art have a problem that is not entirely satisfactory, causing a poor user experience.

### SUMMARY

In order to solve the above technical problem, the present application provides a control method, an autonomous working machine and a storage medium that can enable the autonomous working machine to respond to a user need while satisfying a daily maintenance of a working area and improving an intelligence of the autonomous working machine when a user temporarily starts the autonomous working machine.

In a first aspect, the present application provides a control method for an autonomous working machine, the autonomous working machine being configured to work in a working area, the working area including at least two sub-working areas, the at least two sub-working areas being respectively set with a different working frequency, and the control method including:
respectively obtaining a working frequency of the autonomous working machine in each of the at least two sub-working areas, the working frequency being a number of times of working in a preset working cycle; and
controlling the autonomous working machine to work in the at least two sub-working areas to satisfy a requirement of the working frequency of each of the at least two sub-working areas.

In a second aspect, the present application provides a computer-readable storage medium, the computer-readable storage medium storing a computer program, the computer program being configured to execute the method described in the above embodiment.

In a third aspect, the present application provides an autonomous working machine, configured to work in a working area, the working area including at least two sub-working areas, the at least two sub-working areas being respectively set with a different working frequency, the working frequency being a number of times of working in a preset working cycle, and the autonomous working machine including:
a controller, configured to obtain a working frequency of the autonomous working machine in each of the at least two sub-working areas;
the controller being further configured to control the autonomous working machine to work in the at least two sub-working areas to satisfy a requirement of the working frequency of each of the at least two sub-working areas.

In a fourth aspect, the present application provides a control method for an autonomous working machine, the autonomous working machine being configured to work in a working area, the working area including at least one sub-working area, and the control method including:
the autonomous working machine being triggered to start after a pause and receiving a start command;
confirming whether the autonomous working machine has a work task at a current time, the work task including a scheduled task and/or an area selection task, wherein the scheduled task includes a time interval during which at least one sub-working area is workable, and the area selection task includes a sub-working area to be worked;
confirming a position where the autonomous working machine is located; and
when the autonomous working machine is located in a sub-working area, and has the scheduled task or the area selection task at the current time, controlling the autonomous working machine to execute work in the sub-working area where it is currently located.

In a fifth aspect, the present application provides a computer-readable storage medium, the computer-readable storage medium storing a computer program, the computer program being configured to execute the method described in the above embodiment.

In a sixth aspect, the present application provides an autonomous working machine, configured to work in a working area, the working area including at least one sub-working area, and the autonomous working machine including:
a controller, configured to receive a start command to control the autonomous working machine to start after a pause; the controller being further configured to confirm a position where the autonomous working machine is located and whether there is a work task at a current time, the work task including a scheduled task and/or an area selection task, wherein the scheduled task includes a time interval during which at least one sub-working area is workable, and the area selection task includes a sub-working area to be worked; and
when the autonomous working machine is located in the working area, and has the scheduled task or the area selection task at the current time, the controller being configured to control the autonomous working machine to execute work in the sub-working area where it is currently located.

### BRIEF DESCRIPTION OF DRAWINGS

Through a more detailed description of an embodiment of the present application in combination with an accompanying drawing, the above and other objectives, features and advantages of the present application will become more apparent. A drawing is used to provide a further understanding of the embodiment of the present application and constitutes a part of a specification, and together with the embodiment of the present application is used to explain the present application, and does not constitute a limitation on the present application. In the drawing, a same reference numeral generally represents a same component or step.
FIG. 1 shows a structural schematic diagram of an autonomous working machine provided by an embodiment of the present application;
FIG. 2 shows a module diagram of an autonomous working machine provided by an embodiment of the present application;
FIG. 3 shows a flowchart of a control method for an autonomous working machine provided by an embodiment of the present application;
FIG. 4 shows a flowchart of a control method for an autonomous working machine in one scenario provided by an embodiment of the present application;
FIG. 5 shows an area schematic diagram where a working area includes two sub-working areas in an embodiment of the present application;
FIG. 6 is a flowchart of a further implementation of the control method in Figure 4;
FIG. 7 is a flowchart of a further implementation of the control method in Figure 4;
FIG. 8 shows a flowchart of a control method for an autonomous working machine in another scenario provided by an embodiment of the present application;
FIG. 9 shows a flowchart of an area selection start of an autonomous working machine provided by an embodiment of the present application;
FIG. 10 shows an area schematic diagram where a working area includes multiple sub-working areas in an embodiment of the present application;
FIG. 11 shows a flowchart of a scheduled start of an autonomous working machine provided by an embodiment of the present application;
FIG. 12 shows a flowchart of a control method for an autonomous working machine provided by an embodiment of the present application;
FIG. 13 is a flowchart of a further implementation of the control method in Figure 12;
FIG. 14 is a flowchart of a further implementation of the control method in Figure 12;
FIG. 15 is a flowchart of a further implementation of the control method in Figure 12;
FIG. 16 is a flowchart of a further implementation of the control method in Figure 12 after a working failure in a certain sub-working area;
FIG. 17 is a flowchart of a further implementation in the control method in Figure 12.

### DETAILED DESCRIPTION

The technical solutions in an embodiment of the present application will be clearly and completely described below with reference to a drawing in the embodiment of the present application. Obviously, the described embodiment is only a part of the embodiments of the present application, and not all of the embodiments. Based on the embodiment in the present application, all other embodiments obtained by a person of ordinary skill in the art without making a creative effort fall within the scope of protection of the present application.

In a conventional technology, when a user performs a manual operation such as a manual start or a manual stop on an autonomous working machine, the manual operation of the user is immediately responded to.

However, in the conventional technology, when a manual operation of a user conflicts with a previous operation, a movement task of the previous operation is generally abandoned to complete a current operation task of the user, which results in the autonomous working machine being unable to complete a daily maintenance work of a working area as expected.

An embodiment of the present disclosure provides an autonomous working machine 10, a control method, and a computer-readable storage medium. The autonomous working machine 10 may be an automatic lawn mower, an automatic vacuum cleaner, an automatic mopping machine, an automatic snow sweeper, or another intelligent device capable of an automatic movement, which can automatically move and execute a corresponding work within a specified working area 103, and can also return to a charging station 20 along a boundary corresponding to the working area 103 for a docking or a charging.

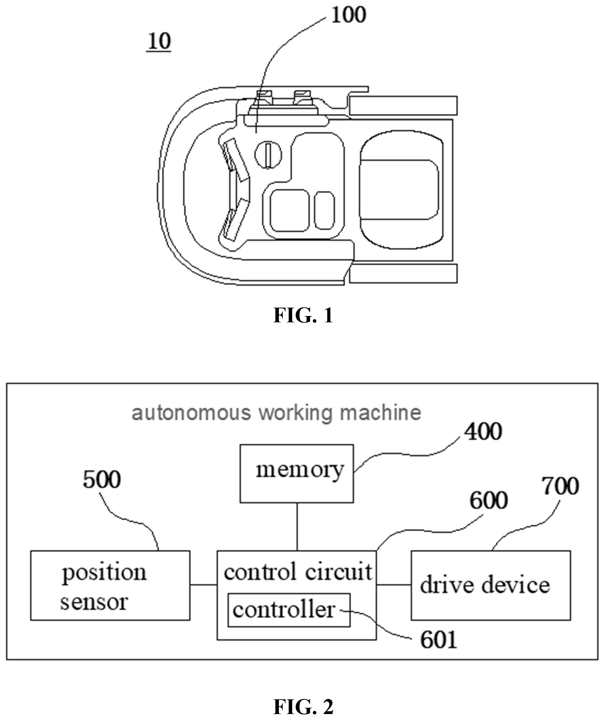

The present embodiment provides an autonomous working machine 10. As shown in Figures 1 and 2, the autonomous working machine 10 includes a body 100, a position sensor 500, and a control circuit 600.

Specifically, the body 100 includes a drive device 700, and the drive device 700 is configured to drive the body 100 to move on a working surface according to a received drive command, and typically includes a wheel and a motor for driving the wheel to rotate. The wheel may include a driving wheel and a driven wheel. The wheel may be distributed on two sides of the body 100, and a number of wheels on each side may be one or two.

The body 100 further includes a working module, and the working module is configured to execute a specific work task. For example, when the autonomous working machine 10 is an automatic lawn mower, the working module includes a mowing blade, a cutting motor, and may also include a mowing height adjustment mechanism or another auxiliary component for optimizing or adjusting a mowing effect; for example, when the autonomous working machine 10 is an automatic vacuum cleaner, the working module includes a vacuum motor, a vacuum inlet, a vacuum tube, a vacuum chamber, a dust collection device, or another working component for executing a vacuuming task; for example, when the autonomous working machine 10 is an automatic snow sweeper, the working module includes a snow sweeping head for a snow sweeping, a snow sweeping motor, and so on.

The body 100 may further include an energy module, and the energy module is configured to provide an energy for various works of the autonomous working machine 10, which may include a rechargeable battery and a charging connection structure, wherein the charging connection structure is typically a charging electrode plate, and the charging electrode plate may be used in conjunction with a charging electrode plate disposed at the charging station 20 to charge the autonomous working machine 10.

The body 100 further includes a memory 400, and the memory 400 is configured to store a data generated by a sensor or the control circuit, or to pre-store a data for use by the control circuit.

The body 100 further includes the position sensor 500, and the position sensor 500 may include an inertial sensor IMU or an odometer ODO installed on the drive device 700, which is configured to obtain a relative position according to a movement condition of the body 100.

The body 100 further includes a collision detector, and the collision detector is configured to sense a number of times the body collides.

In addition to the above modules, the body 100 may further include a housing for accommodating and installing various modules, a control panel for a user operation, and may also include various environmental sensors, such as a humidity sensor, a temperature sensor, an acceleration sensor, or a light sensor, and the above sensors may assist the autonomous working machine 10 in determining a working environment to execute a corresponding program.

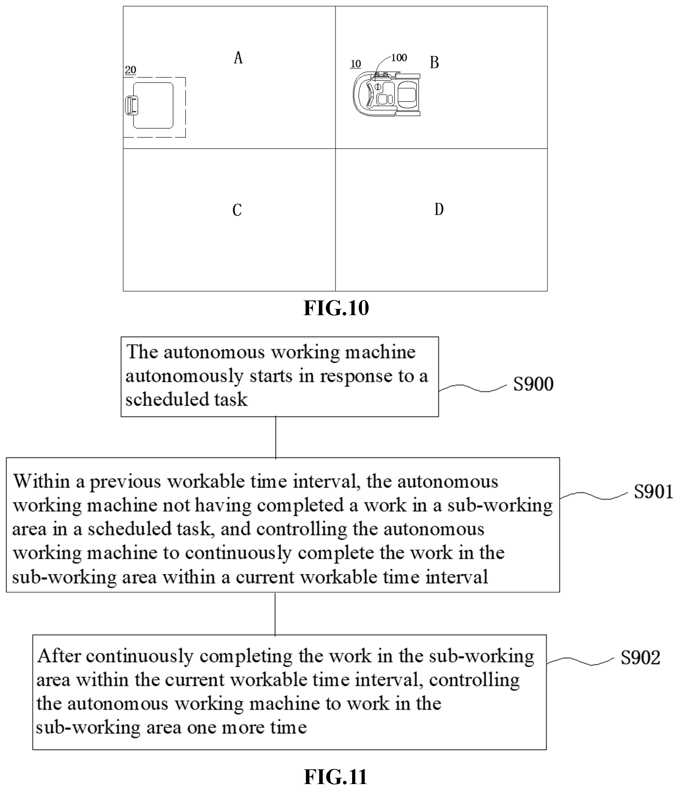

The control circuit 600 is a core component of the autonomous working machine 10, and is configured to control the autonomous working machine 10 to automatically move and work, and a function executed by the control circuit 600 includes controlling the working module to start working or stop, generating a movement path and controlling the drive device 700 to move according to the path, determining a power level of the energy module and timely controlling the autonomous working machine 10 to return to the charging station 20 (refer to Figure 10) for an automatic docking and charging, and executing a corresponding program in combination with a data from an environmental sensor.

When a conventional autonomous working machine travels or operates in a working area, in some scenarios, because the autonomous working machine in the working area may encounter a situation in which the autonomous working machine cannot free itself, a user will move the autonomous working machine away from a trapped position and then restart the autonomous working machine. In other scenarios, when a user temporarily wants the autonomous working machine to go to a sub-area of the working area, or wants the autonomous working machine at the charging station to start executing a movement operation task at a current time, the user may restart the autonomous working machine. After the user starts the autonomous working machine at the current time, the autonomous working machine often immediately responds to a start command of the user at the current time, and cancels or postpones multiple operation tasks that conflict with the start command.

However, when an originally scheduled movement operation task is canceled, the autonomous working machine cannot go to a target working area to execute an originally scheduled operation as expected by the user. When an originally scheduled movement operation task is postponed, the autonomous working machine will execute the movement operation task during a time when the user does not want the operation task to be executed. The above situations will result in a reduced user experience with the autonomous working machine.

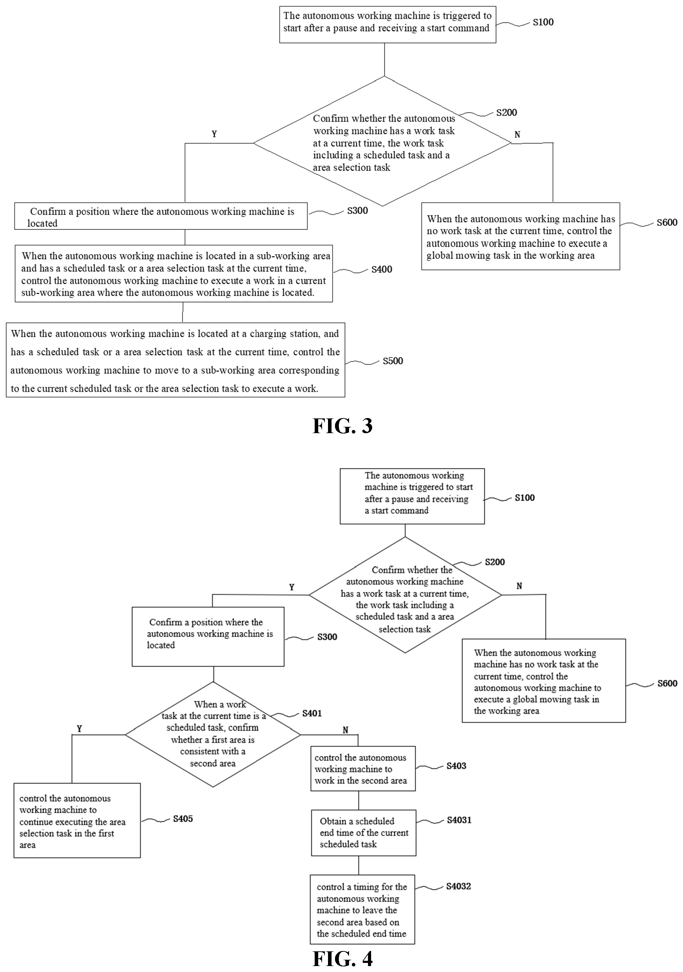

Figure 3 shows a flowchart of a control method for an autonomous working machine 10 provided by an exemplary embodiment of the present application. Exemplarily, the control method in an embodiment of the present application is applied to an autonomous working machine 10 triggered to start by a start command (the start command does not include selecting a sub-working area for the autonomous working machine to execute a work task), and the autonomous working machine 10 is configured to travel and/or work in a working area, and the working area includes at least one sub-working area. As shown in Figure 3, the control method in the embodiment of the present application includes a step S100 to a step S200.

Step S100: The autonomous working machine is triggered to start after a pause and receiving a start command.

Step S200: Confirm whether the autonomous working machine has a work task at a current time, the work task including a scheduled task and an area selection task, wherein the scheduled task includes a time interval during which at least one sub-working area is workable, and the area selection task includes a sub-working area to be worked.

Step 300: Confirm a position where the autonomous working machine is located.

Step 400: When the autonomous working machine is located in a sub-working area and has a scheduled task or an area selection task at the current time, control the autonomous working machine to execute a work in a current sub-working area where the autonomous working machine is located.

In the present embodiment, the autonomous working machine 10 is paused, and after starting in response to a start command, a controller 601 of the control circuit queries that the autonomous working machine 10 is in a state of having a work task at the current time, and further based on the position sensor 500 detecting that a current position is in the working area at the current time, controls the autonomous working machine 10 to execute a work task in a current sub-working area. This makes a working logic of the autonomous working machine more in line with a user need.

It should be noted that before receiving the start command, the autonomous working machine 10 is in a paused state, and the above start command is triggered by a user. For example, a start button is disposed on a body of the autonomous working machine 10, and the user can directly trigger the start command through the start button on the body. For another example, the autonomous working machine 10 can communicate with an external device (such as a mobile phone or a computer), and the user can control the autonomous working machine 10 through an APP built into the external device, and further trigger the above start command through a virtual start button in the APP.

It should also be noted that the sub-working area does not include a position where the charging station 20 is located, and a position where a channel for entering and exiting the charging station 20 is located.

It should also be noted that the autonomous working machine 10 being in a state of having a work task may be that the autonomous working machine 10 has a scheduled task or an area selection task at the current time.

A scheduled task pre-sets a workable time interval for one or more sub-working areas, and the workable time interval and the sub-working area of the scheduled task may be pre-set by a user on the autonomous working machine 10, or set on an external device (such as an APP on a mobile phone or a computer) communicating with the autonomous working machine 10, or may be pre-downloaded by the autonomous working machine 10 from a server. When the autonomous working machine 10 is in a scheduled task state, during a working time corresponding to the scheduled task, the autonomous working machine 10 may be located in a sub-working area corresponding to the scheduled task, may also be located at the charging station 20 to supplement an electric energy, or may be manually moved to another sub-working area.

An area selection task refers to a work task with a pre-planned sub-working area to be worked, and the sub-working area of the area selection task may be pre-set by a user on the autonomous working machine 10, or set on an external device (such as an APP on a mobile phone or a computer) communicating with the autonomous working machine 10. When the autonomous working machine 10 is in an area selection task state at a current time, the autonomous working machine 10 may be located in a sub-working area corresponding to the area selection task, may also be located at the charging station 20 to supplement an electric energy, or may be manually moved to another sub-working area.

Based on the above control method, after the autonomous working machine 10 is triggered to start by a start command after a pause, a current position and whether there is a work task at the current time are detected. When detecting that a current position is in any sub-working area and is in a state of having a work task, the autonomous working machine 10 determines that a user wants to immediately start working in the current sub-working area, and therefore controls the autonomous working machine 10 to start executing a work task in the current sub-working area where the autonomous working machine 10 is located, thus making the autonomous working machine 10 more intelligent.

In a further embodiment, referring to Figure 4, the above control method further includes:
S401: When a work task at the current time is a scheduled task, confirm whether a first area is consistent with a second area. The first area is a sub-working area corresponding to the current scheduled task, the second area is a sub-working area where the autonomous working machine 10 is currently located, and the scheduled task is a work task with a pre-planned working time and a pre-planned sub-working area.
S402: When the first area is consistent with the second area, control the autonomous working machine to continuously execute the scheduled task in the first area;
S403: When the first area is inconsistent with the second area, control the autonomous working machine to work in the second area.

In the present embodiment, when the first area is consistent with the second area, a controller 601 of the autonomous working machine 10 controls the autonomous working machine 10 to execute a movement operation task for the first area based on a task progress of the scheduled task.

Specifically, the task progress of the scheduled task refers to a working area that the autonomous working machine 10 has already worked in the first area. The controller 601 controlling the autonomous working machine 10 to continuously execute the scheduled task in the first area means that the controller 601 determines an area to be worked in the first area based on an already worked area in the first area, and controls the autonomous working machine 10 to execute a movement operation task for the area to be worked in the first area. A manner of executing the movement operation task may be controlling a movement path of the autonomous working machine 10 to completely cover the area to be worked in the first area.

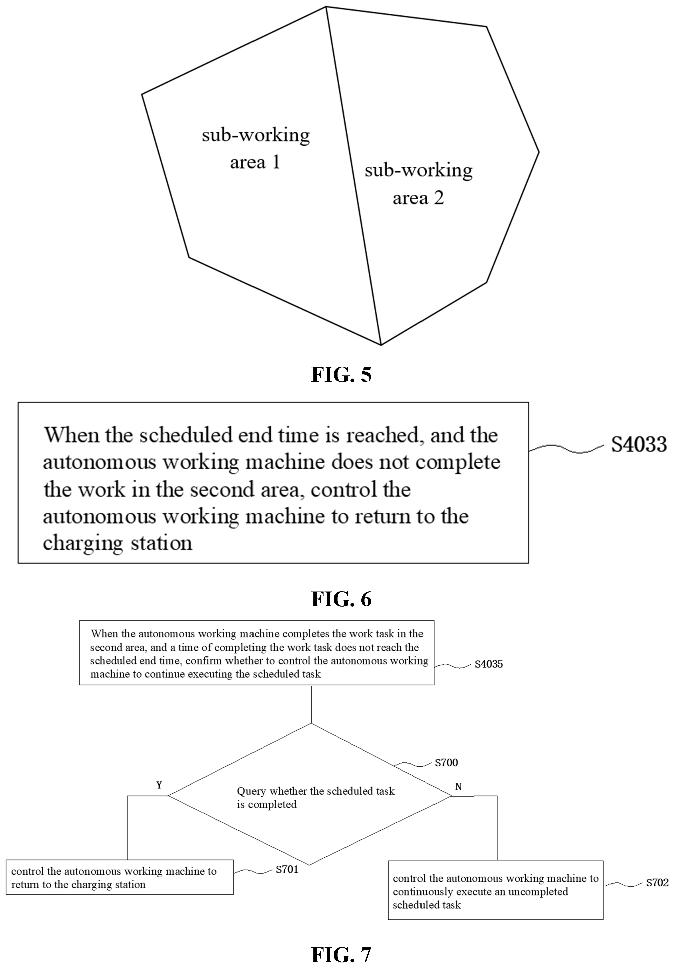

As an example, as shown in Figure 5, a working area includes a sub-working area 1 and a sub-working area 2, the first area is the sub-working area 1, and the second area is also the sub-working area 1, that is, the sub-working area where the autonomous working machine 10 is currently located is the sub-working area corresponding to the current scheduled task, and the controller 601 controls the autonomous working machine 10 to continuously execute a movement operation task in an area to be worked in the sub-working area 1.

In the present embodiment, the first area being inconsistent with the second area means that the sub-working area where the autonomous working machine 10 is currently located is not in the sub-working area corresponding to the current scheduled task. The autonomous working machine 10 may be manually moved to another sub-working area, or a user may control the autonomous working machine 10 to move to the current sub-working area through an APP of an external device. The autonomous working machine 10 determines that the user wants to execute a work task in the current sub-working area, and then the controller 601 controls the autonomous working machine 10 to execute a work task in the current working area. Specifically, a manner of executing the work task may be controlling a movement path of the autonomous working machine 10 to completely cover the current sub-working area. Alternatively, the autonomous working machine queries that the current sub-working area was not completely worked once during a previous working process, and in this case may continue a work that was not completed last time.

As an example, as shown in Figure 5, a working area includes a sub-working area 1 and a sub-working area 2, the first area is the sub-working area 1, and the second area is the sub-working area 2, that is, the sub-working area 2 where the autonomous working machine 10 is currently located is not in the sub-working area 1 corresponding to the current scheduled task, and the controller 601 controls the autonomous working machine 10 to work in the sub-working area 2 where the autonomous working machine 10 is currently located. When the controller 601 queries that a work of the autonomous working machine 10 in the sub-working area 2 was not completed last time, a work that was not completed last time is continued. When the controller 601 queries that a work of the autonomous working machine in the sub-working area 2 was completed, the autonomous working machine 10 is controlled to execute a complete work once in the sub-working area 2.

In a further embodiment, referring to Figure 4, when the first area is inconsistent with the second area, controlling the autonomous working machine to work in the second area includes:
S4031: Obtain a scheduled end time of the current scheduled task.
S4032: When the first area is inconsistent with the second area, control a timing for the autonomous working machine to leave the second area based on the scheduled end time.

It should be noted that a scheduled task pre-plans a workable time interval for at least one sub-working area, and the pre-planned time interval includes a scheduled start time and a scheduled end time, during which the autonomous working machine can work.

As an example, referring to Figure 5, a workable time interval set by a user for a sub-working area 1 is from 10:00 to 13:00 on August 15, 2024, then a scheduled start time is 10:00 on August 15, 2024, and a scheduled end time is 13:00 on August 15, 2024. In addition, the user can also set a working frequency for a sub-working area, which can also be said to set a working cycle. The working frequency is set as a certain number of times within a certain time, for example, several times in several days, several times in several hours, several times in several weeks, and so on. The working cycle is the above-mentioned certain time, for example, the several days in several times in several days, the several hours in several times in several hours, the several weeks in several times in several weeks. As an example, a working frequency of a sub-working area is, for example, once every three days, which means completely executing a work once for the sub-working area within three natural days (a movement path of the autonomous working machine 10 completely covers the sub-working area), and the working cycle of the sub-working area is three days. For example, if a start date of the working cycle is August 15, 2024, then an end date of the current working cycle is August 17, 2024, August 18, 2024 is a start date of a next working cycle, and August 20, 2024 is an end date of the next working cycle, and so on. As another example, a working frequency of a sub-working area is, for example, three times a day, which means completely executing a work three times for the sub-working area within one natural day (a movement path of the autonomous working machine 10 completely covers the sub-working area three times in one day), and the working cycle of the sub-working area is one day. For example, if a start date of the working cycle is August 15, 2024, then a first cycle of the sub-working area is August 15, 2024, and August 16, 2024 is a start date of a next working cycle, and so on.

It can be understood that the autonomous working machine 10 is currently in a working time for a sub-working area in a scheduled task, and due to the above external factor, an execution of a work in the sub-working area is interrupted, and a work in the current sub-working area is executed instead. When a scheduled end time of the current scheduled task set by a schedule arrives, a work task in the current sub-working area may have been completed or may not have been completed. At this time, the autonomous working machine 10 needs to determine when to end a work task in the second area, leave the second area, and how to continue executing a work task after leaving the second area, so as to make the autonomous working machine 10 more intelligent.

In one embodiment, referring to Figure 6, obtaining a scheduled end time of the current scheduled task, and controlling a timing for the autonomous working machine to leave the second area based on the scheduled end time includes:
S4033: When the scheduled end time is reached, and the autonomous working machine does not complete the work in the second area, control the autonomous working machine to return to the charging station 20.

The autonomous working machine 10 not having completed the work in the second area means that a movement path of the autonomous working machine 10 has not completely covered the second area. At this time, the scheduled end time of the scheduled task being reached means that a time for the autonomous working machine 10 to work has ended. In order to avoid destroying a scheduled task pre-set by a user and affecting a life of the user, the autonomous working machine 10 is controlled to return to the charging station 20.

As an example, a scheduled end time of a scheduled task is 13:00 on August 15, 2024. The autonomous working machine 10 works in a second area (a sub-working area 2) before 13:00 on August 15, 2024 arrives. When 13:00 on August 15, 2024 arrives, the autonomous working machine 10 has not completed a work of the sub-working area 2, that is, a movement trajectory of the autonomous working machine 10 has not completely covered the sub-working area 2. At this time, a controller 601 controls the autonomous working machine 10 to stop the work of the sub-working area 2 and return to the charging station 20.

In another embodiment, referring to Figure 7, obtaining a scheduled end time of the current scheduled task, and controlling a timing for the autonomous working machine to leave the second area based on the scheduled end time includes:
S4035: When the autonomous working machine completes the work task in the second area, and a time of completing the work task does not reach the scheduled end time, confirm whether to control the autonomous working machine to continue executing the scheduled task.

Specifically, confirming whether to control the autonomous working machine to continue executing the scheduled task includes:
S700: Query whether the scheduled task is completed.
S701: If yes, control the autonomous working machine to return to the charging station.
S702: If no, control the autonomous working machine to continuously execute an uncompleted scheduled task.

When the autonomous working machine 10 completes a work in the second area, that is, a movement trajectory of the autonomous working machine 10 completely covers the second area, and at this time a scheduled end time of the scheduled task has not been reached, which means that a working time for the autonomous working machine 10 to work has not ended. If a work in one or more sub-working areas in the scheduled task is still uncompleted, the autonomous working machine 10 may continue to complete the interrupted scheduled task. If a work in one or more sub-working areas in the scheduled task has been completed, the autonomous working machine 10 is controlled to return to the charging station 20.

As an example, referring to Figure 5, a scheduled end time of a scheduled task is 13:00 on August 15, 2024. The autonomous working machine 10 works in a second area (a sub-working area 2) before 13:00 on August 15, 2024 arrives. When 13:00 on August 15, 2024 has not arrived, the autonomous working machine 10 has completed a work of the sub-working area 2, that is, a movement trajectory of the autonomous working machine 10 completely covers the sub-working area 2. At this time, a query is made as to whether the scheduled task is completed. For example, the scheduled task is for a sub-working area 1, and a set workable time interval is from 10:00 on August 15, 2024 to 13:00 on August 15, 2024. A work in the sub-working area 1 was interrupted by a work in the sub-working area 2 before completion. Then, the autonomous working machine 10 is controlled to move to the sub-working area 1 to continue completing the work of the sub-working area 1. If the work in the sub-working area 1 was completed before the work in the sub-working area 2 started, this indicates that the scheduled task has been completed, and at this time the autonomous working machine 10 is controlled to return to the charging station 20.

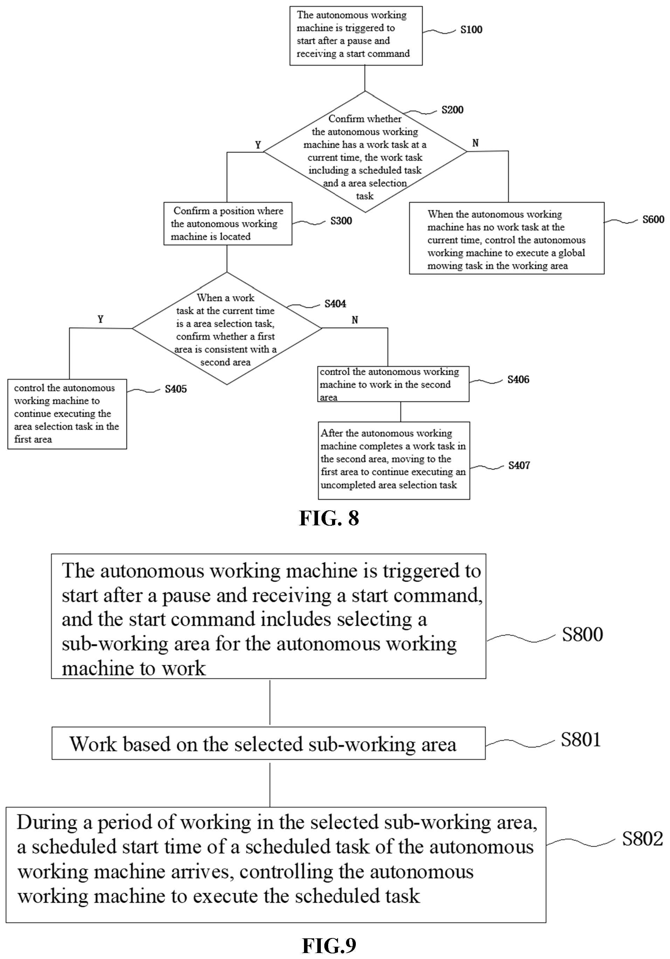

In one embodiment, referring to Figure 8, the above control method further includes:
S404: When a work task at the current time is an area selection task, confirm whether a first area is consistent with a second area; wherein, the first area is a sub-working area corresponding to the current area selection task, and the second area is a sub-working area where the autonomous working machine is currently located;
S405: When the first area is consistent with the second area, control the autonomous working machine to continue executing the area selection task in the first area;
S406: When the first area is inconsistent with the second area, control the autonomous working machine to work in the second area.

In the present embodiment, when the first area is consistent with the second area, a controller 601 of the autonomous working machine 10 controls the autonomous working machine 10 to execute a movement operation task for the first area based on a task progress of the area selection task. Specifically, the task progress of the area selection task refers to a working area that the autonomous working machine has already worked in the first area. A control module controlling the autonomous working machine to continuously execute the area selection task in the first area means that the controller 601 determines an area to be worked in the first area based on an already worked area in the first area, and controls the autonomous working machine 10 to execute a movement operation task for the area to be worked in the first area. A manner of executing the movement operation task may be controlling a movement path of the autonomous working machine to completely cover the area to be worked in the first area.

As an example, as shown in Figure 5, a working area includes a sub-working area 1 and a sub-working area 2, the first area is the sub-working area 1, and the second area is also the sub-working area 1, that is, the sub-working area where the autonomous working machine is currently located is the sub-working area corresponding to the current area selection task, and the controller 601 controls the autonomous working machine 10 to continuously execute a movement operation task in an area to be worked in the sub-working area 1.

In the present embodiment, the first area being inconsistent with the second area means that the sub-working area where the autonomous working machine 10 is currently located is not in the sub-working area corresponding to the current area selection task. The autonomous working machine 10 may be manually moved to another sub-working area, or a user may control the autonomous working machine 10 to move to the current sub-working area through an APP of an external device. The autonomous working machine 10 determines that the user wants to execute a work task in the current sub-working area, and then the controller 601 controls the autonomous working machine 10 to execute a work task in the current working area. Specifically, a manner of executing the work task may be controlling a movement path of the autonomous working machine 10 to completely cover the current sub-working area. Alternatively, the autonomous working machine queries that the current sub-working area was not completely worked once during a previous working process, and in this case may continue a work that was not completed last time.

As an example, as shown in Figure 5, a working area includes a sub-working area 1 and a sub-working area 2, the first area is the sub-working area 1, and the second area is the sub-working area 2, that is, the sub-working area 2 where the autonomous working machine 10 is currently located is not in the sub-working area 1 corresponding to the current scheduled task, and the controller 601 controls the autonomous working machine 10 to work in the sub-working area 2 where the autonomous working machine 10 is currently located. When the controller 601 queries that a work of the autonomous working machine 10 in the sub-working area 2 was not completed last time, a work that was not completed last time is continued. When the controller 601 queries that a work of the autonomous working machine in the sub-working area 2 was completed, the autonomous working machine 10 is controlled to execute a complete work once in the sub-working area 2.

In a further embodiment, referring to Figure 8, the above control method further includes:
S407: After the autonomous working machine completes a work task in the second area, moving to the first area to continue executing an uncompleted area selection task.

In the present embodiment, after the autonomous working machine 10 completes a work in a current sub-working area where the autonomous working machine 10 is located, the autonomous working machine 10 moves back to a sub-working area corresponding to the area selection task to continue the area selection task. This avoids ignoring an area selection task set by a user.

In one embodiment, referring to Figure 3, the above control method further includes:
S500: When the autonomous working machine is located at a charging station, and has a scheduled task or an area selection task at the current time, control the autonomous working machine to move to a sub-working area corresponding to the current scheduled task or the area selection task to execute a work.

In the present embodiment, after the autonomous working machine 10 receives a start command and starts, the autonomous working machine 10 queries that a scheduled task or an area selection task should be executed at the current time, but a position of the autonomous working machine 10 is located at the charging station 20, supplementing an electric energy. The autonomous working machine 10 determines that a need of a user is to immediately go to execute the scheduled task or the area selection task.

In one embodiment, referring to Figure 3, the above control method further includes:
S600: When the autonomous working machine has no work task at the current time, control the autonomous working machine to execute a global mowing task in the working area, wherein, in the global mowing task, a movement trajectory of the autonomous working machine covers an entire working area.

In the present embodiment, after the autonomous working machine 10 receives a start command and starts, the autonomous working machine 10 queries that there is no task at the current time, neither an area selection task nor a scheduled task. The autonomous working machine 10 is temporarily awakened by a user. At this time, a position of the autonomous working machine 10 may be in a working area or may be on the charging station 20. The autonomous working machine 10 determines that a need of the user is to work in the entire working area.

In one embodiment, referring to Figure 9, a start command includes selecting a sub-working area for the autonomous working machine to work, and the above control method further includes:
S800: The autonomous working machine is triggered to start after a pause and receiving a start command, and the start command includes selecting a sub-working area for the autonomous working machine to work.
S801: Work based on the selected sub-working area;
S802: During a period of working in the selected sub-working area, a scheduled start time of a scheduled task of the autonomous working machine arrives, controlling the autonomous working machine to execute the scheduled task, wherein, the scheduled task is to pre-plan a workable time interval for at least one sub-working area.

In the present embodiment, before receiving a start command, the autonomous working machine 10 is in a paused state, and the above start command is triggered by a user. When the user triggers the start command, a sub-working area for the autonomous working machine 10 to work in is selected, and the autonomous working machine 10 goes to the selected sub-working area to work immediately according to a command of the user. When the autonomous working machine 10 is working in the sub-working area selected by the user, and a scheduled start time of a scheduled task arrives, the scheduled task is responded to with priority.

As an example, referring to Figure 10, a working area includes a sub-working area A, a sub-working area B, a sub-working area C, and a sub-working area D. A scheduled task sets a workable time interval for the sub-working area A, the sub-working area B, and the sub-working area C as from 9:00 to 15:00 on August 17, 2024. Before 9:00 on August 17, 2024 arrives, the autonomous working machine 10 receives a start command from a user, and the sub-working area D is selected for the autonomous working machine 10 to work in. The autonomous working machine 10 moves to the sub-working area D to work. Before a work in the sub-working area D is completed, a scheduled start time of the scheduled task, 9:00 on August 17, 2024, arrives, and the autonomous working machine 10 is controlled to move to the sub-working area A or the sub-working area B or the sub-working area C to work. As for which sub-area in the scheduled task to move to for work, other embodiments of the present disclosure will specifically explain, and will not be described in detail here.

In one embodiment, referring to Figure 11, the above control method further includes:
S900: The autonomous working machine autonomously starts in response to a scheduled task.
S901: Within a previous workable time interval, the autonomous working machine not having completed a work in a sub-working area in a scheduled task, and controlling the autonomous working machine to continuously complete the work in the sub-working area within a current workable time interval.

Further, in the present embodiment, the above control method may further include:
S902: After continuously completing the work in the sub-working area within the current workable time interval, controlling the autonomous working machine to work in the sub-working area one more time.

In the present embodiment, the autonomous working machine 10 autonomously starts in response to a scheduled task, and does not start by receiving a start command triggered by a user. A workable time interval of the scheduled task includes a scheduled start time and a scheduled end time. Under a normal circumstance (when a machine does not experience an abnormality or a power shortage), when the scheduled start time arrives, the autonomous working machine 10 will autonomously start, and then query a sub-working area that needs to work within the current workable time interval. When querying that a work of the autonomous working machine 10 in a sub-working area was not completed within a previous workable time interval, the autonomous working machine 10 is controlled to move to the sub-working area to continue executing the work after starting. After the autonomous working machine 10 completes the work in the sub-working area, the autonomous working machine 10 works completely in the sub-working area one more time. Specifically, a time for working completely once in the sub-working area may be selected after a work in another sub-working area in the scheduled task is finished.

As an example, referring to Figure 10, a working area includes a sub-working area A, a sub-working area B, a sub-working area C, and a sub-working area D. A scheduled task sets a workable time interval for the sub-working area A, the sub-working area B, and the sub-working area C as from 9:00 to 15:00 every day, with a start date of August 17, 2024. A user additionally sets a working frequency for the sub-working area A as once a day, sets a working frequency for the sub-working area B as once every two days, and sets a working frequency for the sub-working area C as once every three days. When a scheduled start time of 9:00 on August 17, 2024 arrives, the scheduled task starts to be executed, and the autonomous working machine 10 starts to work in the sub-working area A, the sub-working area B, and the sub-working area C. If a scheduled end time of 15:00 on August 17, 2024 arrives, and a work of the autonomous working machine 10 in the sub-working area C is not completed, the autonomous working machine 10 returns to the charging station 20. A next workable time interval is from 9:00 to 15:00 on August 18, 2024. When a scheduled start time of 9:00 on August 18, 2024 arrives, the scheduled task starts to be executed again, the autonomous working machine 10 starts, and queries that in the scheduled task from 9:00 to 15:00 on August 17, 2024, the autonomous working machine 10 was unable to achieve a complete work in the sub-working area C, and controls the autonomous working machine 10 to move to the sub-working area C to continue the work. Specifically, a manner of executing a continuous work is that the autonomous working machine 10 moves to a position where the autonomous working machine 10 stopped working in the sub-working area C from 9:00 to 15:00 on August 17, 2024, and continues working. Since a working frequency of the sub-working area A is once per day, within the current workable time interval (from 9:00 to 15:00 on August 18, 2024), the autonomous working machine 10 still needs to work once in the sub-working area A. A working frequency of the sub-working area B is once every 2 days. If the autonomous working machine 10 has already completed a work of the sub-working area from 9:00 to 15:00 on August 17, 2024, then within the current workable time interval, the autonomous working machine will not work in the sub-working area B again. The autonomous working machine 10 works once in the sub-working area A, moves to the sub-working area C, and then executes a complete work once more in the sub-working area C.

It can be understood that if a scheduled end time of 15:00 on August 17, 2024 arrives, and a work of the autonomous working machine 10 in the sub-working area A or the sub-working area B is not completed, similarly, when a scheduled start time of 9:00 on August 18, 2024 arrives, the autonomous working machine 10 is controlled to move to the sub-working area A or the sub-working area B to continue executing the work. After completing a work in every sub-working area in the scheduled task, the autonomous working machine 10 is then controlled to move to the sub-working area A or the sub-working area B to execute a complete work once.

In addition, the present disclosure also provides an embodiment, which is a computer-readable storage medium, the computer-readable storage medium storing a computer program, the computer program being configured to execute the above method.

An autonomous working machine in a current market only allows a user to simply set a working time for a certain working area, such as setting to work in the sub-working area from 8:00-9:00 today, and cannot set a working frequency for the working area. For a user to ensure that a working effect of a working area can meet an expectation, the user needs to frequently set a working time for the working area, making the autonomous working machine not intelligent enough and unable to meet a personalized need of the user.

The present disclosure provides an embodiment, referring to Figures 1 and 2, which is an autonomous working machine 10, configured to work in a working area, the working area including at least one sub-working area, and the autonomous working machine 10 including:
a controller 601, configured to receive a start command to control the autonomous working machine to start after a pause; the controller 601 being further configured to confirm a position where the autonomous working machine is located and whether there is a work task at a current time, the work task including a scheduled task and/or an area selection task, wherein the scheduled task includes a time interval during which at least one sub-working area is workable, and the area selection task includes a sub-working area to be worked;
when the autonomous working machine is located in the working area, and has a scheduled task or an area selection task at the current time, the controller 601 being configured to control the autonomous working machine to execute a work in a current sub-working area where the autonomous working machine is located.

In the present embodiment, after the autonomous working machine 10 is paused, and after starting in response to a start command, a controller 601 of a control circuit queries that the autonomous working machine 10 is in a state of having a work task at the current time, and then based on a position sensor detecting that a current position is in the working area at the current time, controls the autonomous working machine 10 to execute a work task in a current sub-working area where the autonomous working machine 10 is located. This makes a working logic of the autonomous working machine more in line with a user need.

An embodiment of the present disclosure further provides an autonomous working machine 10, a control method, and a computer-readable storage medium. The autonomous working machine 10 may be an automatic lawn mower, an automatic vacuum cleaner, an automatic mopping machine, an automatic snow sweeper, or another intelligent device capable of an automatic movement, which can automatically move and execute a corresponding work within a specified working area 103, and can also return to a charging station 20 along a boundary corresponding to the working area 103 for a docking or a charging.

The present embodiment provides an autonomous working machine 10. As shown in Figures 1 and 2, the autonomous working machine 10 includes a body 100, a position sensor 500, and a control circuit 600.

Specifically, the body 100 includes a drive device 700, and the drive device 700 is configured to drive the body 100 to move on a working surface according to a received drive command, and typically includes a wheel and a motor for driving the wheel to rotate. The wheel may include a driving wheel and a driven wheel. The wheel may be distributed on two sides of the body 100, and a number of wheels on each side may be one or two.

The body 100 further includes a working module, and the working module is configured to execute a specific work task. For example, when the autonomous working machine 10 is an automatic lawn mower, the working module includes a mowing blade, a cutting motor, and may also include a mowing height adjustment mechanism or another auxiliary component for optimizing or adjusting a mowing effect; for example, when the autonomous working machine 10 is an automatic vacuum cleaner, the working module includes a vacuum motor, a vacuum inlet, a vacuum tube, a vacuum chamber, a dust collection device, or another working component for executing a vacuuming task; for example, when the autonomous working machine 10 is an automatic snow sweeper, the working module includes a snow sweeping head for a snow sweeping, a snow sweeping motor, and so on.

The body 100 may further include an energy module, and the energy module is configured to provide an energy for various works of the autonomous working machine 10, which may include a rechargeable battery and a charging connection structure, wherein the charging connection structure is typically a charging electrode plate, and the charging electrode plate may be used in conjunction with a charging electrode plate disposed at the charging station 20 to charge the autonomous working machine 10.

The body 100 further includes a memory 400, and the memory 400 is configured to store a data generated by a sensor or the control circuit, or to pre-store a data for use by the control circuit.

The body 100 further includes the position sensor 500, and the position sensor 500 may include an inertial sensor IMU or an odometer ODO installed on the drive device 700, which is configured to obtain a relative position according to a movement condition of the body 100.

The body 100 further includes a collision detector, and the collision detector is configured to sense a number of times the body collides.

In addition to the above modules, the body 100 may further include a housing for accommodating and installing various modules, a control panel for a user operation, and may also include various environmental sensors, such as a humidity sensor, a temperature sensor, an acceleration sensor, or a light sensor, and the above sensors may assist the autonomous working machine 10 in determining a working environment to execute a corresponding program.

The control circuit 600 is a core component of the autonomous working machine 10, and is configured to control the autonomous working machine 10 to automatically move and work, and a function executed by the control circuit 600 includes controlling the working module to start working or stop, generating a movement path and controlling the drive device 700 to move according to the path, determining a power level of the energy module and timely controlling the autonomous working machine 10 to return to the charging station 20 for an automatic docking and charging, and executing a corresponding program in combination with a data from an environmental sensor.

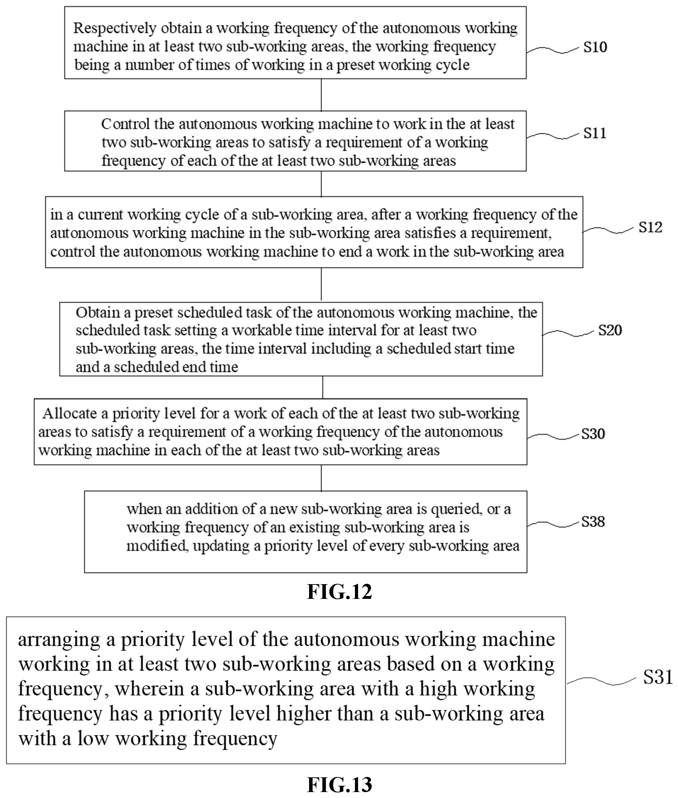

Figure 12 shows a flowchart of a control method for an autonomous working machine 10 provided by an exemplary embodiment of the present application. Exemplarily, the autonomous working machine 10 is configured to work in a working area, and the working area includes at least two sub-working areas. As shown in Figure 12, the control method in an embodiment of the present application includes a step S10 to a step S12.
S10: Respectively obtain a working frequency of the autonomous working machine in at least two sub-working areas, the working frequency being a number of times of working in a preset working cycle;
S11: Control the autonomous working machine to work in the at least two sub-working areas to satisfy a requirement of a working frequency of each of the at least two sub-working areas.

In the present embodiment, a user may set a working frequency for multiple sub-working areas, or the autonomous working machine may automatically generate a working frequency for each sub-working area. For example, the autonomous working machine may autonomously generate a working frequency suitable for each sub-working area based on a different mowing height of a different sub-working area set by the user. The autonomous working machine may work in a sub-working area according to a working frequency, so that a user may diversely customize own working preferences.

It should be noted that a working frequency is a certain number of times within a certain time, for example, several times in several days, several times in several hours, several times in several weeks, and so on. A preset working cycle is the above-mentioned certain time, for example, the several days in several times in several days, the several hours in several times in several hours, the several weeks in several times in several weeks. In the present embodiment, a working frequency refers to a number of times n that the autonomous working machine moves and works to complete a work in a specific area within a time period t, and the time t is the working cycle. For example, a working frequency may be completing once in x hours, completing once in y days, or completing z times in one day, and a working cycle correspondingly is x hours, y days, or one day. Within the time t, an interval between a start or a completion of one work and another work is not specifically regulated, and may be an interval of a same time or an interval of a different time according to an actual need. In one embodiment, a start time of n works may be selected to be distributed substantially evenly within the time t. When the autonomous working machine is a lawn mower, a height of a lawn can be better controlled within an ideal range.

In a further embodiment, the above control method further includes:
S12: Respectively generate a working cycle of each of at least two sub-working areas based on a working frequency of each of the at least two sub-working areas; in a current working cycle of a sub-working area, after a working frequency of the autonomous working machine in the sub-working area satisfies a requirement, control the autonomous working machine to end a work in the sub-working area.

In one embodiment, the autonomous working machine works in each sub-working area based on a working frequency, and each sub-working area having a working frequency naturally generates a working cycle. For example, if a working frequency of a sub-working area is once every three days, the autonomous working machine works in the sub-working area once every three days, then a working cycle of the sub-working area is three days. The autonomous working machine may work in the sub-working area on any day within the three days. After working once, a work in the sub-working area ends in the current working cycle, or in these three days, and the autonomous working machine will not work in the sub-working area again.

In a further embodiment, the above control method further includes:
S20: Obtain a preset scheduled task of the autonomous working machine, the scheduled task setting a workable time interval for at least two sub-working areas, the time interval including a scheduled start time and a scheduled end time.
S30: Allocate a priority level for a work of each of the at least two sub-working areas to satisfy a requirement of a working frequency of the autonomous working machine in each of the at least two sub-working areas.

In the present embodiment, a user sets a scheduled task for the autonomous working machine 10, that is, sets a workable time interval for at least two sub-working areas. The autonomous working machine 10 may work in multiple sub-working areas selected by the user within the time interval. The user further sets a working frequency for each of multiple sub-working areas selected in the scheduled task respectively. The autonomous working machine 10 may autonomously select a working time for these sub-working areas within the time interval (that is, autonomously arrange a priority level for a work of at least two sub-working areas), so that a working frequency of these sub-working areas can be satisfied. This makes the autonomous working machine 10 more intelligent, without requiring a user to set a specific working time for each sub-working area, reducing a workload of the user.

In one embodiment, referring to Figure 13, within a time interval, the autonomous working machine autonomously arranging a priority level for a work of at least two sub-working areas includes:
S31: Arrange a priority level of the autonomous working machine working in at least two sub-working areas based on a working frequency.

The autonomous working machine 10 may arrange a working sequence for a sub-working area in a scheduled task within a time interval, so that a working time in the time interval is allocated more reasonably.

In one embodiment, arranging a priority level of the autonomous working machine working in the at least two sub-working areas based on the working frequency may be set as:
a sub-working area with a high working frequency has a priority level higher than a sub-working area with a low working frequency. A user has a higher requirement for a sub-working area with a higher working frequency and expects to achieve a better working effect. Therefore, when the autonomous working machine 10 arranges a priority level for multiple sub-working areas, a sub-working area with a high working frequency is arranged before a sub-working area with a low working frequency. Such an allocation is more reasonable.

As an example, referring to Figure 2, a working area includes a sub-working area 1 and a sub-working area 2. A scheduled task set by a user is to work in the sub-working area 1 and the sub-working area 2 from 9:00 to 15:00 every day, with a start time of August 17, 2018. Then a scheduled start time of the scheduled task is 9:00 every day starting from August 17, 2018, and a scheduled end time is 15:00 every day starting from August 17, 2018. The autonomous working machine 10 may work in the sub-working area 1 and the sub-working area 2 during this time period. In addition, the user sets a working frequency for the sub-working area 1 and the sub-working area 2 respectively. A working frequency of the sub-working area 1 is once a day, and a working frequency of the sub-working area 2 is once every two days. When 9:00 on August 17, 2018 arrives, the autonomous working machine 10 automatically starts in response to the scheduled task, queries that a working frequency of the sub-working area 1 is greater than a working frequency of the sub-working area 2, and controls the autonomous working machine 10 to move to the sub-working area 1 to start working. After the autonomous working machine 10 completes a work in the sub-working area 1, the autonomous working machine 10 is controlled to move to the sub-working area 2 to start working. If the autonomous working machine completes a work in the sub-working area 2 and 15:00 on August 17, 2018 has still not arrived, the autonomous working machine 10 is controlled to return to the charging station 20. If the autonomous working machine has not completed a work in the sub-working area 2 and 15:00 on August 17, 2018 arrives, the autonomous working machine 10 is controlled to return to the charging station 20.

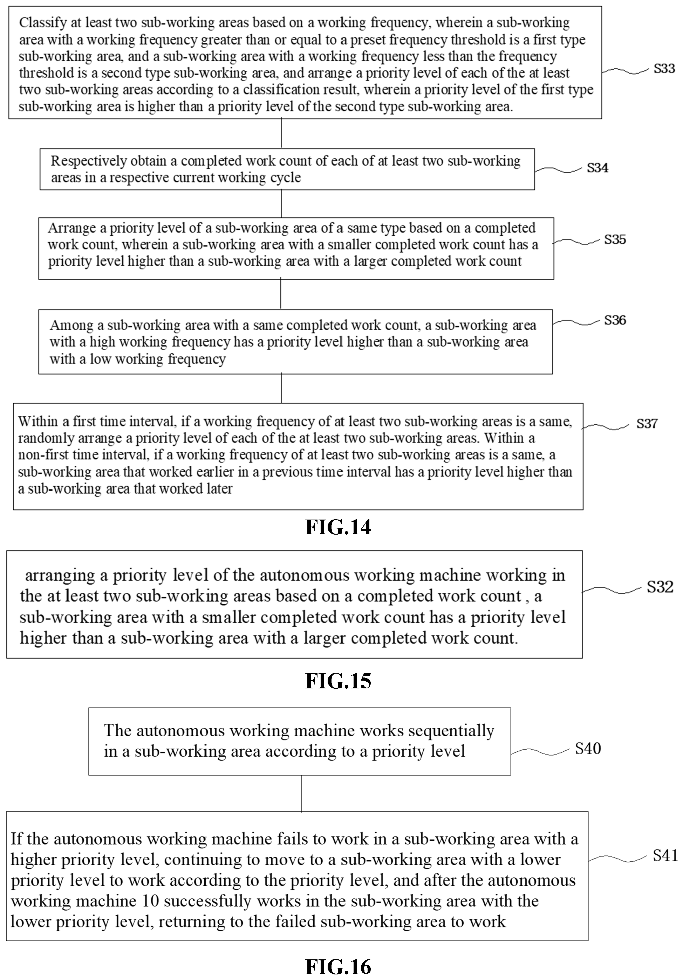

In another embodiment, referring to Figure 14, arranging a priority level of the autonomous working machine 10 working in at least two sub-working areas based on the working frequency includes:
S33: Classify at least two sub-working areas based on a working frequency, wherein a sub-working area with a working frequency greater than or equal to a preset frequency threshold is a first type sub-working area, and a sub-working area with a working frequency less than the frequency threshold is a second type sub-working area, and arrange a priority level of each of the at least two sub-working areas according to a classification result, wherein a priority level of the first type sub-working area is higher than a priority level of the second type sub-working area.

It should be noted that a frequency threshold is pre-set by a user. A working frequency of a sub-working area being greater than or equal to the frequency threshold proves that the user has a higher working requirement for the sub-working area, and a priority level for a work of this sub-working area may be placed in front. A working frequency of a sub-working area being less than the frequency threshold proves that the user has a lower working requirement for the sub-working area, and a priority level for a work of this sub-working area may be placed last. This makes an allocation of a working time for each sub-working area by the autonomous working machine 10 more reasonable and in line with a need of the user. It should also be noted that the first type sub-working area having a higher priority level than the second type sub-working area may be: one, first working in a sub-working area in a first type sub-working area region, until a working frequency of every sub-working area in the first type sub-working area satisfies a working frequency, and then working in a sub-working area in a second type sub-working area, to make the sub-working area of the second type sub-working area satisfy a working frequency. Two, first working in a sub-working area in a first type sub-working area region, and after a work count of every sub-working area in the first type sub-working area satisfies a preset count (for example, once, twice, and so on, which is not limited in the present embodiment), then working in a sub-working area in a second type sub-working area, and after a work count of every sub-working area in the second type sub-working area satisfies a preset count (for example, once, twice, and so on, which is not limited in the present embodiment), continuing to work in a sub-working area in the first type sub-working area region, to make the work count of every sub-working area in the first type sub-working area satisfy the preset count, and so on in a cycle, until every sub-working area in the first type sub-working area and the second type sub-working area satisfies a working frequency.

Further, arranging a priority level of the autonomous working machine 10 working in at least two sub-working areas based on a working frequency further includes:
S34: Respectively obtain a completed work count of each of at least two sub-working areas in a respective current working cycle.
S35: Arrange a priority level of a sub-working area of a same type based on a completed work count, wherein a sub-working area with a smaller completed work count has a priority level higher than a sub-working area with a larger completed work count. That is to say, when performing a priority ranking for multiple sub-working areas in a sub-working area of a same type, the autonomous working machine 10 arranges a sub-working area with a smaller completed work count before a working area with a larger completed work count, to avoid a certain sub-working area not being worked at all.

Still further, arranging a priority level of the autonomous working machine 10 working in at least two sub-working areas based on the working frequency further includes:
S36: Among a sub-working area with a same completed work count, a sub-working area with a high working frequency has a priority level higher than a sub-working area with a low working frequency.
S37: Within a first time interval, if a working frequency of at least two sub-working areas is a same, randomly arrange a priority level of each of the at least two sub-working areas. Within a non-first time interval, if a working frequency of at least two sub-working areas is a same, a sub-working area that worked earlier in a previous time interval has a priority level higher than a sub-working area that worked later. That is to say, when performing a priority ranking for multiple sub-working areas in a sub-working area of a same type, a completed work count of the sub-working area is first judged, and under a premise that the completed work count is a same, a sub-working area with a higher working frequency has a priority level higher than a sub-working area with a lower working frequency. If a working frequency is also a same, then it is judged whether a current time interval is a first time interval. In a case of a first time interval, a sub-working area with a same working frequency is randomly arranged. The sub-working area with the same working frequency has a working sequence within the first time interval, and then in a subsequent time interval, an arrangement method for the sub-working area with the same working frequency is that a sub-working area that executed a work first in a previous time interval has a priority level higher than a sub-working area that executed a work later in the previous time interval.

Arranging the autonomous working machine 10 to work in at least two sub-working areas based on a working frequency further includes:
at a scheduled start time and/or after a completion of a work in a sub-working area, updating a priority level of each of the at least two sub-working areas. Specifically, before updating a priority level of every sub-working area, a sub-working area satisfying a working frequency requirement is deleted from a ranking of the at least two sub-working areas.

As an example, please refer to the following table:

| working area | completed work count | working frequency |
|---|---|---|
| sub-working area 1 | 0 | once a day |
| sub-working area 2 | 1 | three times a day |
| sub-working area 3 | 0 | twice a day |
| sub-working area 4 | 3 | three times a day |
| sub-working area 5 | 0 | once every two days |
| sub-working area 6 | 1 | once every three days |
| sub-working area 7 | 0 | once every seven days |
| sub-working area 8 | 0 | three times a day |
| sub-working area 9 | 1 | twice a day |

A working area includes 9 sub-working areas, a user sets a working frequency for each of the 9 sub-working areas respectively, and sets a frequency threshold as once a day. A scheduled task set by the user is to work in a sub-working area 1 to a sub-working area 9 from 9:00 to 15:00 every day, with a start time of August 17, 2018. Then a scheduled start time of the scheduled task is 9:00 every day starting from August 17, 2018, and a scheduled end time is 15:00 every day starting from August 17, 2018. The autonomous working machine 10 may work in the sub-working area 1 to the sub-working area 9 during this time period.

The autonomous working machine 10 autonomously arranges a priority level for a work of a sub-working area 1 to a sub-working area 9. First, a working frequency of a sub-working area 1, a sub-working area 2, a sub-working area 3, a sub-working area 4, a sub-working area 8, and a sub-working area 9 is greater than a frequency threshold (once a day), and a working frequency of a sub-working area 5, a sub-working area 6, and a sub-working area 7 is less than the frequency threshold (once a day). Therefore, the sub-working area 1, the sub-working area 2, the sub-working area 3, the sub-working area 4, the sub-working area 8, and the sub-working area 9 are classified as a first type sub-working area, and the sub-working area 5, the sub-working area 6, and the sub-working area 7 are classified as a second type sub-working area. A priority level of the sub-working area 1, the sub-working area 2, the sub-working area 3, the sub-working area 4, the sub-working area 8, and the sub-working area 9 is higher than that of the sub-working area 5, the sub-working area 6, and the sub-working area 7. The autonomous working machine 10 first completes every work in the first type sub-working area, and then executes a work in the second type sub-working area.

For a ranking of multiple sub-working areas in a first type sub-working area, after the autonomous working machine 10 completes a work in a certain sub-working area, the autonomous working machine 10 determines whether a working frequency of the sub-working area satisfies a working frequency set by a user for the sub-working area. When the working frequency of the sub-working area satisfies the working frequency set by the user for the sub-working area, the sub-working area is deleted from a list of the scheduled task. When the working frequency of the sub-working area does not satisfy the working frequency set by the user for the sub-working area, the autonomous working machine 10 places the sub-working area in a next round of a priority level ranking to continue working. In a first round of ranking, the sub-working area 4 has already satisfied a working frequency set by the user for the sub-working area, and the sub-working area 4 is deleted from the first round of ranking. In the first round of ranking, a sub-working area with a completed work count of 0 is a sub-working area 1, a sub-working area 3, and a sub-working area 8; a sub-working area with a completed work count of 1 is a sub-working area 2 and a sub-working area 9; and a sub-working area with a completed work count of 3 is the sub-working area 4. A working frequency of the sub-working area 8 is greater than that of the sub-working area 3, a working frequency of the sub-working area 3 is greater than that of the sub-working area 1, and a working frequency of the sub-working area 2 is greater than that of the sub-working area 9. Therefore, in the first round of ranking, a priority level sequence of each sub-working area in a first type working area is the sub-working area 8, the sub-working area 3, the sub-working area 1, the sub-working area 2, and the sub-working area 9. In a second round of ranking, the sub-working area 1 and the sub-working area 9 have already satisfied a working frequency set by the user for them, and the sub-working area 1 and the sub-working area 9 are deleted from the second round of ranking. In the second round of ranking, a sub-working area with a completed work count of 1 is the sub-working area 8 and the sub-working area 3, and a sub-working area with a completed work count of 2 is the sub-working area 2. Therefore, in the second round of ranking, a priority level sequence of each sub-working area in the first type working area is the sub-working area 8, the sub-working area 3, and the sub-working area 2. In a third round of ranking, the sub-working area 3 and the sub-working area 2 have already satisfied a working frequency set by the user for them, and the sub-working area 3 and the sub-working area 2 are deleted from the third round of ranking. In the third round of ranking, only the sub-working area 8 remains among a sub-working area with a completed work count of 2. Therefore, in the third round of ranking, a priority level sequence of each sub-working area in the first type working area is the sub-working area 8. After three rounds of ranking, a working frequency of every sub-working area in the first type sub-working area is satisfied, and the autonomous working machine 10 starts to rank a priority level of multiple sub-working areas in a second type sub-working area.

When ranking multiple sub-working areas in a second type sub-working area, a sub-working area 6 has already satisfied a working frequency set by a user for the sub-working area, and the sub-working area 6 is deleted from a first round of ranking. In the first round of ranking, a sub-working area with a completed work count of 0 is a sub-working area 5 and a sub-working area 7. A working frequency of the sub-working area 5 is greater than that of the sub-working area 7. Therefore, in the first round of ranking, a priority level sequence of each sub-working area in a second type working area is the sub-working area 5 and the sub-working area 7. After the first round of ranking ends, the autonomous working machine 10 determines that every sub-working area in the second type sub-working area satisfies a working frequency set by the user, and ends a ranking of the second type sub-working area.

In summary, a priority arranged by the autonomous working machine 10 to make a sub-working area 1 to a sub-working area 9 satisfy a working frequency set by the user is: a sub-working area 8, a sub-working area 3, a sub-working area 1, a sub-working area 2, a sub-working area 9, the sub-working area 8, the sub-working area 3, the sub-working area 2, the sub-working area 8, a sub-working area 5, and a sub-working area 7.

It can be understood that in another embodiment, arranging a priority level of the autonomous working machine 10 working in at least two sub-working areas based on a working frequency further includes:
in a sub-working area of a same type, a sub-working area with a high working frequency has a priority level higher than a sub-working area with a low working frequency. That is to say, when performing a priority ranking for multiple sub-working areas in a sub-working area of a same type, the autonomous working machine 10 arranges a sub-working area with a higher working frequency before a sub-working area with a lower working frequency, to prioritize completing a work in a sub-working area with a high working frequency.

Further, arranging a priority level of the autonomous working machine 10 working in at least two sub-working areas based on the working frequency further includes:
respectively obtaining a completed work count of each of the at least two sub-working areas in a respective current working cycle;
among a sub-working area with a same working frequency, a sub-working area with a smaller completed work count has a priority level higher than a sub-working area with a larger completed work count.

Within a first time interval, if a completed work count of at least two sub-working areas is a same, randomly arrange a priority level of each of the at least two sub-working areas. Within a non-first time interval, if a completed work count of at least two sub-working areas is a same, a sub-working area that worked earlier in a previous time interval has a priority level higher than a sub-working area that worked later. That is to say, when performing a priority ranking for multiple sub-working areas in a sub-working area of a same type, a working frequency of the sub-working area is first judged, and under a premise that the working frequency is a same, a sub-working area with a smaller completed work count has a priority level higher than a sub-working area with a larger completed work count. If a completed work count is also a same, then it is judged whether a current time interval is a first time interval. In a case of a first time interval, a sub-working area with a same completed work count is randomly arranged. The sub-working area with the same completed work count has a working sequence within the first time interval, and then in a subsequent time interval, an arrangement method for the sub-working area with the same completed work count is that a sub-working area that executed a work first in a previous time interval has a priority level higher than a sub-working area that executed a work later in the previous time interval.

Arranging the autonomous working machine 10 to work in at least two sub-working areas based on a working frequency further includes:
at a scheduled start time and/or after a completion of a work in each sub-working area, updating a priority level of every sub-working area. Specifically, before updating a priority level of every sub-working area, a sub-working area satisfying a working frequency requirement is deleted from a ranking of the at least two sub-working areas.

In another embodiment, referring to Figure 15, allocating a priority level for a work of at least two sub-working areas includes:
S32: Respectively obtain a completed work count of each of at least two sub-working areas in a respective current working cycle, and arrange a priority level of the autonomous working machine working in the at least two sub-working areas based on the completed work count. Specifically, arranging a priority level of the autonomous working machine working in the at least two sub-working areas based on a completed work count includes: a sub-working area with a smaller completed work count has a priority level higher than a sub-working area with a larger completed work count.

As an example, referring to Figure 2, a working area includes a sub-working area 1 and a sub-working area 2. A scheduled task set by a user is to work in the sub-working area 1 and the sub-working area 2 from 9:00 to 15:00 every day, with a start time of August 17, 2018. Then a scheduled start time of the scheduled task is 9:00 every day starting from August 17, 2018, and a scheduled end time is 15:00 every day starting from August 17, 2018. The autonomous working machine 10 may work in the sub-working area 1 and the sub-working area 2 during this time period. In addition, the user sets a working frequency for the sub-working area 1 and the sub-working area 2 respectively. A working frequency of the sub-working area 1 is twice a day, and a working frequency of the sub-working area 2 is once every two days. When 9:00 on August 17, 2018 arrives, the autonomous working machine 10 automatically starts in response to the scheduled task, queries that a completed work count of both the sub-working area 1 and the sub-working area 2 is 0, and then randomly arranges an order of the sub-working area 1 and the sub-working area 2. For example, the autonomous working machine 10 is controlled to randomly move to the sub-working area 1 to start working. After the autonomous working machine 10 completes a work in the sub-working area 1, a completed work count of the sub-working area 1 becomes 1, and a completed work count of the sub-working area 2 is 0. The autonomous working machine 10 is controlled to move to the sub-working area 2 to start working. If the autonomous working machine completes a work in the sub-working area 2 and 15:00 on August 17, 2018 has still not arrived, the autonomous working machine 10 is controlled to move to the sub-working area 1 to work. If the autonomous working machine has not completed a work in the sub-working area 2 and 15:00 on August 17, 2018 arrives, the autonomous working machine 10 is controlled to return to the charging station 20.

In one embodiment, continuing to refer to Figure 12, arranging a priority level of the autonomous working machine 10 working in at least two sub-working areas based on a working frequency includes:
when an addition of a new sub-working area is queried, or a working frequency of an existing sub-working area is modified, updating a priority level of every sub-working area.

Specifically, within a time interval, when an addition of a new sub-working area is queried, or a working frequency of an existing sub-working area is modified, if a new sub-working area or a sub-working area with a modified working frequency has a highest priority level, the autonomous working machine 10 is controlled to pause a work in a current sub-working area and transfer to the new sub-working area or the sub-working area with the modified working frequency to work; if a working frequency of the current sub-working area is modified and a completed working frequency satisfies the modified working frequency, the autonomous working machine 10 is controlled to transfer to a sub-working area with a next highest priority level.

Outside a time interval, when an addition of a new sub-working area is queried, or a working frequency of an existing sub-working area is modified, a priority level of every sub-working area is updated.

In the present embodiment, after the autonomous working machine 10 receives a signal from a user to change a scheduled task or a working frequency of a sub-working area, the autonomous working machine 10 rearranges a priority level for working in multiple sub-working areas according to a method for arranging a priority level of a sub-working area in any of the above embodiments, to satisfy a latest need of the user. If the user modifies a working frequency of a sub-working area within a workable time interval of the autonomous working machine 10, causing a change in a current priority ranking of each sub-working area, the autonomous working machine 10 is immediately controlled to move to a sub-working area with a current highest priority level to work. If the user modifies a working frequency of a sub-working area outside a workable time interval of the autonomous working machine 10, when the autonomous working machine 10 starts in response to a scheduled start time of a scheduled task, the autonomous working machine 10 is controlled to rearrange a priority level sequence of each sub-working area.

As an example, referring to Figure 10, a working area includes a sub-working area A, a sub-working area B, a sub-working area C, and a sub-working area D. A scheduled task set by a user is to work in the sub-working area A and the sub-working area B and the sub-working area C from 9:00 to 15:00 every day, with a start time of August 17, 2018. Then a scheduled start time of the scheduled task is 9:00 every day starting from August 17, 2018, and a scheduled end time is 15:00 every day starting from August 17, 2018. The autonomous working machine 10 may work in the sub-working area A, the sub-working area B, and the sub-working area C during this time period. In addition, the user sets a working frequency for the sub-working area A, the sub-working area B, and the sub-working area C respectively. A working frequency of the sub-working area A is once a day, a working frequency of the sub-working area B is once every two days, a working frequency of the sub-working area C is twice a day, and a frequency threshold is once a day. A completed cutting count of the sub-working area A, the sub-working area B, and the sub-working area C is 0.

When 9:00 on August 17, 2018 arrives, the autonomous working machine 10 automatically starts in response to the scheduled task, queries that a working frequency of the sub-working area A and the sub-working area C is greater than or equal to once a day, a working frequency of the sub-working area B is less than once a day, and a working frequency of the sub-working area C is greater than a working frequency of the sub-working area A. The autonomous working machine 10 autonomously arranges a priority level for a work of each sub-working area as: the sub-working area C, the sub-working area B, the sub-working area C, and the sub-working area A. The autonomous working machine 10 moves to the sub-working area C to start working when 9:00 on August 17, 2018 arrives. During a second round of work in the sub-working area C, the autonomous working machine 10 receives a new scheduled task from the user, adds a sub-working area D to the scheduled task, and sets a working frequency for the sub-working area as three times a day. A completed work count of the sub-working area D is 0. The autonomous working machine 10 queries that a working frequency of the sub-working area D is greater than that of the sub-working area C, and then controls the autonomous working machine 10 to stop a work in the sub-working area C and transfer to the sub-working area D to work. During a second round of work in the sub-working area C, if the user modifies a working frequency of the sub-working area C to once a day, the autonomous working machine 10 is controlled to leave the sub-working area C and work in the sub-working area A.

When 9:00 on August 17, 2018 has not arrived, the autonomous working machine 10 receives a new scheduled task from the user, adds a sub-working area D to the scheduled task, and sets a working frequency for the sub-working area D as three times a day. A completed work count of the sub-working area D is 0. After the autonomous working machine 10 starts in response to a scheduled start time of 9:00 on August 17, 2018, a priority level sequence for the sub-working area A, the sub-working area B, the sub-working area C, and the sub-working area D is rearranged. The autonomous working machine 10 queries that a working frequency of the sub-working area A, the sub-working area C, and the sub-working area D is greater than or equal to once a day, a working frequency of the sub-working area B is less than once a day, and a working frequency of the sub-working area D is greater than a working frequency of the sub-working area C, and a working frequency of the sub-working area C is greater than a working frequency of the sub-working area A. The autonomous working machine 10 autonomously arranges a priority level for a work of each sub-working area as: the sub-working area D, the sub-working area C, the sub-working area B, the sub-working area D, the sub-working area C, the sub-working area D, and the sub-working area A.

When 9:00 on August 17, 2018 has not arrived, the user changes a working frequency of a sub-working area A to once every three days. After the autonomous working machine 10 starts in response to a scheduled start time of 9:00 on August 17, 2018, a priority level sequence for the sub-working area A, a sub-working area B, and a sub-working area C is rearranged. The autonomous working machine 10 queries that a working frequency of the sub-working area C is greater than or equal to once a day, a working frequency of the sub-working area A and the sub-working area B is less than once a day, and a working frequency of the sub-working area B is greater than a working frequency of the sub-working area A. The autonomous working machine 10 autonomously arranges a priority level for a work of each sub-working area as: the sub-working area C, the sub-working area C, the sub-working area B, and the sub-working area A.

In one embodiment, referring to Figure 16, the above control method further includes:
S40: The autonomous working machine works sequentially in a sub-working area according to a priority level;
S41: If the autonomous working machine fails to work in a sub-working area with a higher priority level, continuing to move to a sub-working area with a lower priority level to work according to the priority level, and after the autonomous working machine 10 successfully works in the sub-working area with the lower priority level, returning to the failed sub-working area to work.

In the present embodiment, the autonomous working machine 10 executes a work in each sub-working area according to an already arranged priority level. When a work of the autonomous working machine 10 in a certain sub-working area fails, such as detecting an animal or a person in a currently working sub-working area, and the autonomous working machine 10 cannot continue working in the currently working sub-working area, it is determined that the work in the sub-working area has failed, and the autonomous working machine 10 moves to a sub-working area with a next highest priority level to work. When a work in the sub-working area with the next highest priority level is completed, a priority level for every sub-working area in the scheduled task is rearranged, and the failed sub-working area has a highest priority level, therefore returning to the failed sub-working area to work.

As an example, referring to Figure 10, a user sets a working frequency for a sub-working area A, a sub-working area B, a sub-working area C, and a sub-working area D respectively. A working frequency of the sub-working area A is three times a day, a working frequency of the sub-working area B is twice a day, a working frequency of the sub-working area C is once a day, and a working frequency of the sub-working area D is once every two days. Then, the autonomous working machine 10 autonomously arranges a priority level for a work of each sub-working area as: the sub-working area A, the sub-working area B, the sub-working area C, the sub-working area A, the sub-working area B, the sub-working area A, and the sub-working area D.

If the autonomous working machine 10 fails to work in a sub-working area A, the autonomous working machine 10 is controlled to move to a sub-working area B. If the autonomous working machine 10 also fails to work in the sub-working area B, the autonomous working machine 10 moves to a sub-working area C. If the autonomous working machine 10 also fails to work in the sub-working area C, the autonomous working machine 10 moves to a sub-working area D. If the autonomous working machine 10 also fails to work in the sub-working area D, the autonomous working machine 10 returns to the charging station 20. If the autonomous working machine 10 completes a work in the sub-working area D, or the autonomous working machine 10 successfully works in the sub-working area D, a priority level for the sub-working area A, the sub-working area B, the sub-working area C, and the sub-working area D is rearranged, and the priority level is: the sub-working area A, the sub-working area B, the sub-working area C, the sub-working area A, the sub-working area B, and the sub-working area A.

If the autonomous working machine 10 fails to work in a sub-working area A, the autonomous working machine 10 is controlled to move to a sub-working area B. If the autonomous working machine 10 completes a work in the sub-working area B, or the autonomous working machine 10 successfully works in the sub-working area B, a priority level for the sub-working area A, the sub-working area B, a sub-working area C, and a sub-working area D is rearranged, and the priority level is: the sub-working area A, the sub-working area C, the sub-working area A, the sub-working area B, the sub-working area A, and the sub-working area D.

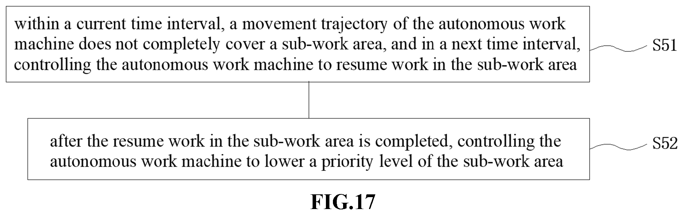

In an embodiment, referring to FIG. 17, the control method further includes:
S51: within a current time interval, a movement trajectory of the autonomous work machine does not completely cover a sub-work area, and in a next time interval, controlling the autonomous work machine to resume work in the sub-work area;

Further, the control method further includes:
S52: after the resume work in the sub-work area is completed, controlling the autonomous work machine to lower a priority level of the sub-work area.

Specifically, a manner of lowering the priority level of the sub-work area may be placing the priority level of the sub-work area at the end of all sub-work areas in the current time interval, for example, after completing work of all the sub-work areas in a current workable time interval, controlling the autonomous work machine to work once again in the sub-work area where the resume work has been performed; and the manner may also be randomly inserting a work order of the sub-work area into the middle of all the sub-work areas in the current time interval; and the manner may also be not working in the sub-work area again in the current time interval.

In this embodiment, querying whether work frequencies of all the sub-work areas in a reservation task satisfy requirements; and after the work frequencies of the autonomous work machine 10 in all the sub-work areas satisfy the requirements, controlling the autonomous work machine 10 to additionally work once in the sub-work area.

When a reservation deadline of a time interval arrives and work of the autonomous work machine 10 in a certain sub-work area is not completed, which may also be said that the movement trajectory of the autonomous work machine 10 fails to completely cover the sub-work area, when a reservation start time of a next workable time interval arrives, the autonomous work machine 10 moves to the sub-work area to resume work, the autonomous work machine 10 queries priority levels of respective sub-work areas in the current time interval, and works in the sub-work areas according to the priority levels, and when work of all the sub-work areas is completed, and work frequencies of all the sub-work areas all satisfy the work frequencies set by a user, controlling the autonomous work machine 10 to work completely once again in the sub-work area.

As an example, referring to FIG. 10, the work area includes a sub-work area A, a sub-work area B, a sub-work area C, and a sub-work area D, the reservation task set by the user is to work in the sub-work area A, the sub-work area B, the sub-work area C, and the sub-work area D from 9:00 to 15:00 every day, a start time is August 17, 2018, and then a reservation start time of the reservation task is 9:00 every day starting from August 17, 2018, and a reservation deadline is 15:00 every day starting from August 17, 2018. The autonomous work machine 10 queries that a sequence of priority levels of respective sub-work areas is: the sub-work area A, the sub-work area B, the sub-work area C, the sub-work area A, the sub-work area B, the sub-work area A, and the sub-work area D. The autonomous work machine 10 does not complete work of the sub-work area C at the reservation deadline 15:00 on August 17, 2018, autonomously starts at the reservation start time 9:00 on August 18, 2018, and moves to the sub-work area C to continue work until the work of the sub-work area C is completed. After the autonomous work machine 10 completes the work of the sub-work area C, the autonomous work machine 10 continues to work in the sub-work area A, the sub-work area B, the sub-work area A, and the sub-work area D, and when the above work is completed, the autonomous work machine 10 repeats performing work once in the sub-work area C.

In an embodiment, the control method further includes:
when the autonomous work machine is artificially moved to another sub-work area or receives a selection task during a period of working in a sub-work area in the reservation task, controlling the autonomous work machine to execute a work task in the moved sub-work area or a sub-work area corresponding to the selection task.

In this embodiment, during the period when the autonomous work machine 10 works based on the reservation task, the user generates a temporary command to set a selection task, or the user temporarily drags the autonomous work machine 10 to another sub-work area, the autonomous work machine 10 determines that the user wants to work in the sub-work area corresponding to the selection task, or work in the sub-work area dragged by the user, and the controller 601 controls the autonomous work machine 10 to interrupt the reservation task, and move to the sub-work area corresponding to the selection task to work or work in the sub-work area dragged by the user.

In addition, the present application further provides an embodiment, which is a computer-readable storage medium, wherein the storage medium stores a computer program, and the computer program is used to execute the above method.

In addition, the present application further provides an embodiment, referring to FIG. 1 and FIG. 2, which is an autonomous work machine configured to work in a work area, wherein the work area includes at least two sub-work areas, and the at least two sub-work areas are respectively set with different work frequencies. The autonomous work machine includes:
a controller 601, configured to acquire work frequencies of the autonomous work machine in the at least two sub-work areas;
the controller 601 is further configured to control the autonomous work machine to work in the at least two sub-work areas to satisfy requirements of the work frequencies of the at least two sub-work areas.

In this embodiment, the user may set work frequencies for a plurality of sub-work areas, the autonomous work machine acquires the work frequencies set by the user for the sub-work areas, or the autonomous work machine may automatically generate work frequencies for respective sub-work areas, for example, the autonomous work machine may autonomously generate work frequencies suitable for the respective sub-work areas based on different cutting heights of different sub-work areas set by the user, and the autonomous work machine may work in the sub-work areas according to the work frequencies, so that the user may diversify and customize their own work preferences.

It should be understood that, in the embodiments of the present application, the controller may include a processor, and the processor may use a general-purpose central processing unit (CPU), a microprocessor, an application specific integrated circuit (ASIC), or one or more integrated circuits to execute related programs to implement technical solutions provided by the embodiments of the present application.

The storage device (also referred to as memory) in the embodiments of the present application may include a read-only memory and a random access memory, and provide instructions and data to the processor. A part of the processor may further include a non-volatile random access memory. For example, the processor may further store information of a device type.

In an implementation process, respective steps of the above method may be completed by an integrated logic circuit of hardware in the controller or instructions in a form of software. The method for requesting uplink transmission resources disclosed in combination with the embodiments of the present application may be directly embodied as being executed and completed by a hardware processor, or being executed and completed by a combination of hardware and software modules in the processor. The software module may be located in a mature storage medium in the art such as a random access memory, a flash memory, a read-only memory, a programmable read-only memory or an electrically erasable programmable memory, a register, and the like. The storage medium is located in the memory, and the controller reads information in the memory and completes the steps of the above method in combination with hardware thereof. To avoid repetition, details are not described herein again.

It should be understood that, in the embodiments of the present application, the processor may be a Central Processing Unit (CPU), and the processor may also be other general-purpose processors, Digital Signal Processors (DSPs), Application Specific Integrated Circuits (ASICs), Field Programmable Gate Arrays (FPGAs) or other programmable logic devices, discrete gates or transistor logic devices, discrete hardware components, and the like. The general-purpose processor may be a microprocessor or the processor may also be any conventional processor, and the like.

It should be understood that, in the embodiments of the present application, "B corresponding to A" means that B is associated with A, and B may be determined according to A. However, it should also be understood that determining B according to A does not mean determining B only according to A, and B may also be determined according to A and/or other information.

It should be understood that the term "and/or" herein is merely an association relationship describing associated objects, and indicates that three relationships may exist, for example, A and/or B may indicate three cases: A exists alone, both A and B exist, and B exists alone. In addition, the character "/" herein generally indicates that the associated objects before and after the character are in an "or" relationship.

It should be understood that, in various embodiments of the present application, magnitudes of sequence numbers of the above respective processes do not mean an order of execution sequences, and execution sequences of the respective processes should be determined by functions and internal logic thereof, and should not constitute any limitation on an implementation process of the embodiments of the present application.

In the several embodiments provided in the present application, it should be understood that the disclosed system, apparatus, and method may be implemented in other manners. For example, the apparatus embodiments described above are merely schematic, for example, a division of the units is merely a logical function division, and there may be other division manners in actual implementation, for example, a plurality of units or components may be combined or integrated into another system, or some features may be ignored or not executed. In addition, the displayed or discussed mutual coupling or direct coupling or communication connection may be indirect coupling or communication connection through some interfaces, apparatuses or units, and may be in electrical, mechanical or other forms.

The units described as separate components may be or may not be physically separated, and components displayed as units may be or may not be physical units, that is, may be located in one place, or may be distributed to a plurality of network units. Some or all of the units may be selected according to actual needs to achieve the objectives of the solutions of the present embodiments.

In addition, respective functional units in respective embodiments of the present application may be integrated into one processing unit, or respective units may strictly physically exist alone, or two or more units may be integrated into one unit.

In the above embodiments, the implementation may be completely or partially realized by software, hardware, firmware, or any combination thereof. When implemented by software, the implementation may be completely or partially realized in a form of a computer program product. The computer program product includes one or more computer instructions. When the computer program instructions are loaded and executed on a computer, the processes or functions according to the embodiments of the present application are completely or partially generated. The computer may be a general-purpose computer, a special-purpose computer, a computer network, or other programmable apparatuses. The computer instructions may be stored in a computer-readable storage medium, or transmitted from one computer-readable storage medium to another computer-readable storage medium, for example, the computer instructions may be transmitted from one website site, computer, server or data center to another website site, computer, server or data center in a wired (for example, coaxial cable, optical fiber, Digital Subscriber Line (DSL)) or wireless (for example, infrared, wireless, microwave, etc.) manner. The computer-readable storage medium may be any available medium that can be accessed by a computer or a data storage device such as a server, a data center, and the like that integrates one or more available media. The available medium may be a magnetic medium (for example, a floppy disk, a hard disk, a magnetic tape), an optical medium (for example, a Digital Video Disc (DVD)), or a semiconductor medium (for example, a Solid State Disk (SSD)), and the like.

The above are only specific implementations of the present application, but the protection scope of the present application is not limited thereto. Any variation or replacement readily conceived by any person skilled in the art within the technical scope disclosed in the present application shall be covered within the protection scope of the present application. Therefore, the protection scope of the present application shall be subject to the protection scope of the claims.

## Claims

1. A control method for an autonomous working machine, the autonomous working machine being configured to work in a working area, wherein:
the working area comprises at least two sub-working areas, the at least two sub-working areas are respectively set with a different working frequency, and the control method comprises:
respectively obtaining a working frequency of the autonomous working machine in each of the at least two sub-working areas, the working frequency being a number of times of working in a preset working cycle; and
controlling the autonomous working machine to work in the at least two sub-working areas to satisfy a requirement of the working frequency of each of the at least two sub-working areas.

2. The control method according to claim 1, wherein the control method comprises:
during a working cycle for a sub-working area, after the working frequency of the autonomous working machine in the sub-working area satisfies a requirement, controlling the autonomous working machine to end work in the sub-working area.

3. The control method according to claim 1 or 2, wherein the control method comprises:
obtaining a preset scheduled task of the autonomous working machine, the scheduled task including a time interval during which each of the at least two sub-working areas is workable, the time interval including a scheduled start time and a scheduled end time; and
allocating a priority level for work of each of the at least two sub-working areas to satisfy the requirement of the working frequency of the autonomous working machine in each of the at least two sub-working areas.

4. The control method according to claim 3, wherein allocating the priority level for work of each of the at least two sub-working areas comprises:
arranging the priority level of the autonomous working machine working in each of the at least two sub-working areas based on the working frequency.

5. The control method according to claim 4, wherein arranging the priority level of the autonomous working machine working in each of the at least two sub-working areas based on the working frequency comprises:
a sub-working area with a high working frequency has a priority level higher than a sub-working area with a low working frequency.

6. The control method according to any one of claims 3-5, wherein allocating the priority level for work of each of the at least two sub-working areas comprises:
classifying the at least two sub-working areas based on the working frequency, wherein a sub-working area with a working frequency greater than or equal to a preset frequency threshold is a first type sub-working area, and a sub-working area with a working frequency less than the frequency threshold is a second type sub-working area; and
arranging the priority level of each of the at least two sub-working areas according to a classification result, wherein the priority level of the first type sub-working area is higher than the priority level of the second type sub-working area.

7. The control method according to claim 6, wherein allocating the priority level for work of each of the at least two sub-working areas further comprises:
respectively obtaining a completed work count of each of the at least two sub-working areas in a respective current working cycle; and
arranging a priority level of a sub-working area of a same type based on the completed work count, wherein a sub-working area with a smaller completed work count has a priority level higher than a sub-working area with a larger completed work count.

8. The control method according to claim 3, wherein the control method further comprises:
respectively obtaining a completed work count of each of the at least two sub-working areas in a respective current working cycle; and
arranging the priority level of the autonomous working machine working in each of the at least two sub-working areas based on the completed work count.

9. The control method according to claim 7, wherein the control method further comprises:
among sub-working areas with a same completed work count, a sub-working area with a high working frequency has a priority level higher than a sub-working area with a low working frequency.

10. The control method according to any one of claims 4-9, wherein arranging the priority level of the autonomous working machine working in each of the at least two sub-working areas based on the working frequency comprises:
when an addition of a new sub-working area is queried, or a working frequency of an existing sub-working area is modified, updating a priority level of every sub-working area.

11. The control method according to any one of claims 4-9, wherein arranging the autonomous working machine to work in the at least two sub-working areas based on the working frequency further comprises:
at the scheduled start time and/or after work in a sub-working area is completed, updating the priority level of each of the at least two sub-working areas.

12. The control method according to claim 11, wherein arranging the priority level of the autonomous working machine working in each of the at least two sub-working areas based on the working frequency further comprises:
within the time interval, when an addition of a new sub-working area is queried, or a working frequency of an existing sub-working area is modified,
if a priority level of the new sub-working area or the sub-working area with a modified working frequency is a highest level, controlling the autonomous working machine to pause work in a current sub-working area, and to transfer to the new sub-working area or the sub-working area with the modified working frequency to work; and
if a working frequency of the current sub-working area is modified, and a completed working frequency satisfies the modified working frequency, controlling the autonomous working machine to transfer to a sub-working area with a next highest priority level.

13. The control method according to claim 11, wherein arranging the priority level of the autonomous working machine working in each of the at least two sub-working areas based on the working frequency further comprises:
outside the time interval, when an addition of a new sub-working area is queried, or a working frequency of an existing sub-working area is modified, updating a priority level of every sub-working area.

14. The control method according to any one of claims 4-9, wherein the control method further comprises:
the autonomous working machine working in a sub-working area sequentially according to a priority level; and
if the autonomous working machine fails to work in a sub-working area with a higher priority level, continuing to move to a sub-working area with a lower priority level to work according to the priority level, and after the autonomous working machine successfully works in the sub-working area with the lower priority level, returning to the failed sub-working area to work.

15. The control method according to claim 3, wherein the control method further comprises:
if, within a current time interval, the movement trajectory of the autonomous working machine has not completely covered a sub-working area, controlling the autonomous working machine to continue working in the sub-working area in a next time interval.

16. The control method according to claim 3, wherein the control method further comprises:
after the continuous work in the sub-working area is completed, controlling the autonomous working machine to lower a priority level of the sub-working area.

17. The control method according to claim 3, wherein the control method further comprises:
when the autonomous working machine is working in a sub-working area in the scheduled task, and is manually moved to another sub-working area or receives an area selection task, controlling the autonomous working machine to execute a work task in the sub-working area after being moved or a sub-working area corresponding to the area selection task.

18. An autonomous working machine, configured to work in a working area, the working area including at least two sub-working areas, wherein the at least two sub-working areas are respectively set with a different working frequency, and the autonomous working machine comprises:
a controller, configured to obtain a working frequency of the autonomous working machine in each of the at least two sub-working areas, the working frequency being a number of times of working in a preset working cycle;
the controller being further configured to control the autonomous working machine to work in the at least two sub-working areas to satisfy a requirement of the working frequency of each of the at least two sub-working areas.

19. A computer-readable storage medium, wherein the computer-readable storage medium stores a computer program, the computer program being configured to execute the method according to any one of claims 1 to 17.

20. A control method for an autonomous working machine, the autonomous working machine being configured to work in a working area, the working area including at least one sub-working area, wherein the control method comprises:
the autonomous working machine being triggered to start after pausing and receiving a start command;
confirming whether the autonomous working machine has a work task at a current time, the work task including a scheduled task and/or an area selection task, wherein the scheduled task comprises a time interval during which at least one sub-working area is workable, and the area selection task comprises a sub-working area to be worked;
confirming a position where the autonomous working machine is located; and
when the autonomous working machine is located in a sub-working area, and has the scheduled task or the area selection task at the current time, controlling the autonomous working machine to execute work in the sub-working area where it is currently located.

21. The control method according to claim 20, wherein the control method further comprises:
when the autonomous working machine is located at a charging station, and has the scheduled task or the area selection task at the current time, controlling the autonomous working machine to move to a sub-working area corresponding to the current scheduled task or the area selection task to execute work.

22. The control method according to claim 20, wherein the control method further comprises:
when the autonomous working machine has no work task at the current time, controlling the autonomous working machine to execute a global mowing task in the working area, wherein, in the global mowing task, a movement trajectory of the autonomous working machine covers the entire working area.

23. The control method according to claim 22, wherein the control method further comprises:
if, during a period when the autonomous working machine is executing the global mowing task, a scheduled start time of a scheduled task of the autonomous working machine arrives, controlling the autonomous working machine to execute the scheduled task.

24. The control method according to claim 20, wherein the control method further comprises:
when a work task at the current time is a scheduled task, confirming whether a first area is consistent with a second area; wherein, the first area is a sub-working area corresponding to the current scheduled task, and the second area is a sub-working area where the autonomous working machine is currently located;
when the first area is consistent with the second area, controlling the autonomous working machine to continuously execute the scheduled task in the first area; and
when the first area is inconsistent with the second area, controlling the autonomous working machine to work in the second area.

25. The control method according to claim 24, wherein controlling the autonomous working machine to work in the second area when the first area is inconsistent with the second area comprises:
obtaining a scheduled end time of the current scheduled task; and
when the first area is inconsistent with the second area, controlling a timing for the autonomous working machine to leave the second area based on the scheduled end time.

26. The control method according to claim 25, wherein controlling the timing for the autonomous working machine to leave the second area based on the scheduled end time comprises:
when the scheduled end time is reached, and the autonomous working machine does not complete work in the second area, controlling the autonomous working machine to return to a charging station.

27. The control method according to claim 25, wherein controlling the timing for the autonomous working machine to leave the second area based on the scheduled end time comprises:
when the autonomous working machine completes work in the second area, and a work completion time does not reach the scheduled end time, confirming whether to control the autonomous working machine to move to the first area to execute a scheduled task.

28. The control method according to claim 27, wherein confirming whether to control the autonomous working machine to move to the first area to continue executing the scheduled task comprises:
querying whether the scheduled task is completed, if yes, controlling the autonomous working machine to return to the charging station, and if no, controlling the autonomous working machine to continuously execute an uncompleted scheduled task.

29. The control method according to claim 20, wherein the control method further comprises:
when a work task at the current time is an area selection task, confirming whether a first area is consistent with a second area; wherein, the first area is a sub-working area corresponding to the current area selection task, and the second area is a sub-working area where the autonomous working machine is currently located;
when the first area is consistent with the second area, controlling the autonomous working machine to continue executing the area selection task in the first area; and
when the first area is inconsistent with the second area, controlling the autonomous working machine to work in the second area.

30. The control method according to claim 20, wherein the control method further comprises: after the autonomous working machine completes a work task in the second area, moving to the first area to continue executing an uncompleted area selection task.

31. The control method according to claim 20, wherein the control method further comprises:
the autonomous working machine autonomously starting in response to the scheduled task;
within a previous workable time interval, the autonomous working machine did not complete work in a sub-working area in the scheduled task, controlling the autonomous working machine to continuously complete the work in the sub-working area within a current workable time interval; and
after continuously completing the work in the sub-working area within the current workable time interval, controlling the autonomous working machine to work in the sub-working area one more time.

32. The control method according to claim 20, wherein the start command comprises selecting a sub-working area for the autonomous working machine to work, and the control method further comprises:
working based on a selected sub-working area; and
during a period of working in the selected sub-working area, a scheduled start time of a scheduled task of the autonomous working machine arrives, controlling the autonomous working machine to execute the scheduled task.

33. An autonomous working machine, configured to work in a working area, the working area including at least one sub-working area, wherein the autonomous working machine comprises:
a controller, configured to receive a start command to control the autonomous working machine to start after a pause;
the controller being further configured to confirm a position where the autonomous working machine is located and whether there is a work task at a current time, the work task including a scheduled task and/or an area selection task, wherein the scheduled task comprises a time interval during which at least one sub-working area is workable, and the area selection task comprises a sub-working area to be worked; and
when the autonomous working machine is located in the working area, and has the scheduled task or the area selection task at the current time, the controller being configured to control the autonomous working machine to execute work in the sub-working area where it is currently located.

34. A computer-readable storage medium, wherein the computer-readable storage medium stores a computer program, the computer program being configured to execute the control method according to any one of claims 20 to 32.
